Europäisches Patentamt

European Patent Office

Office européen des brevets

(11) Veröffentlichungsnummer: **0 372 375**
**A2**

## (12) EUROPÄISCHE PATENTANMELDUNG

(21) Anmeldenummer: 89122050.1

(22) Anmeldetag: 29.11.89

(51) Int. Cl.⁵: **B29C 73/00, B29C 65/34, B60J 10/02**

(30) Priorität: 06.12.88 DE 3841036

(43) Veröffentlichungstag der Anmeldung:
**13.06.90 Patentblatt 90/24**

(84) Benannte Vertragsstaaten:
**AT BE CH DE ES FR GB GR IT LI LU NL SE**

(71) Anmelder: **MEHLER VARIO SYSTEM GmbH**
**Edelzeller Strasse 53**
**D-6400 Fulda(DE)**

(72) Erfinder: **Stolz, Josef**
**Witzelstrasse 2**
**D-6400 Fulda(DE)**
Erfinder: **Gössmann, Rainer**
**Edelzeller Strasse 53**
**D-6400 Fulda(DE)**

(74) Vertreter: **Görtz, Dr. Fuchs, Dr. Luderschmidt**
**Patentanwälte**
**Abraham-Lincoln-Strasse 7 Postfach 46 60**
**D-6200 Wiesbaden(DE)**

(54) **Verfahren zum Ersetzen einer Fensterscheibe in einem flexiblen Verdeck und Austauschscheibe für dieses Verfahren.**

(57) Für das Austauschen einer unbrauchbar gewordenen Heckscheibe (2) im Klappverdeck (1) eines Cabriolets ist eine Austauschscheibe (6) vorgesehen, deren Umlaufrahmen (7) an seiner Innenseite mit einem Heißschmelzkleber (9) versehen ist. Eingearbeitet in den Umlaufrahmen (7) sind elektrische Widerstandsheizdrähte (10), durch deren Strombeaufschlagung der Heißschmelzkleber (9) erweicht werden kann, um eine Klebverbindung mit einem stehengelassenen Randbereich (5) der alten Scheibe (2) einzughen. Ein erneuter Scheibenaustausch kann auf einfache Weise dadurch erfolgen, daß der Heißschmelzkleber (9) wieder erweicht, die vorhandene Austauschscheibe herausgenommen und gegen eine neue gleicher Art ersetzt wird.

Fig.1

## Verfahren zum Ersetzen einer Fensterscheibe in einem flexiblen Verdeck und Austauschscheibe für dieses Verfahren

Die Erfindung betrifft ein Verfahren zum Ersetzen einer Fensterscheibe in einer flexiblen Verdeckbespannung, insbesondere im Klappverdeck eines Fahrzeuges sowie eine Austauschscheibe für ein solches Verfahren.

Kraftfahrzeuge mit einem flexiblen Klappverdeck, sog. Cabriolets, sind zum raumsparenden Unterbringen des Klappverdeckes im allgemeinen auch mit einer flexiblen Heckscheibe versehen. Diese Heckscheibe wird durch das Betätigen des Verdeckes stark beansprucht, wobei das flexible, transparente Material, welches nicht so widerstandsfähig ist, wie eine Glasscheibe, Oberflächenverletzungen ausgesetzt ist, die die Durchsichtigkeit der Scheibe auf Dauer beeinträchtigen.

Das Austauschen der Scheiben macht bisher große Mühe, da diese im allgemeinen fest in die Verdeckbespannung eingenäht sind, um eine ausreichende Regenabdichtung zu erzielen. Um die Austauschscheibe nicht neu in die Verdeckbespannung einnähen zu müssen, ist man bereits den Weg gegangen, die zu ersetzende Scheibe nur in soweit herauszutrennen, daß eine Umfangskante von ihr erhalten bleibt, mit der die Austauschscheibe dann verklebt werden kann. Dieser Vorgang ist jedoch nur einmal möglich.

Der Erfindung liegt die Aufgabe zugrunde, ein Verfahren und eine dafür geeignete Austauschscheibe zu schaffen, mit denen es möglich ist, eine einmal herausgeschnittene, ursprünglich fest in die Verdeckbespannung eingearbeitete Heckscheibe zu ersetzen und diese Ersatzscheibe nach Unbrauchbarwerden ihrerseits wieder austauschen zu können.

Diese Aufgabe wird erfindungsgemäß durch ein Verfahren gemäß dem kennzeichnenden Teil des Patentanspruches 1 gelöst. Eine für das Verfahren geeignete Austauschscheibe weist die Merkmale des kennzeichnenden Teiles des Anspruches 4 auf. Zweckmäßige und bevorzugte Weiterbildungen der Erfindung sind in den Unteransprüchen beansprucht.

Wenn die Erfindung auch speziell im Hinblick auf den Austausch von Heckscheiben bei Cabriolets beschrieben wird, so ist die Erfindung darüber hinaus bei allen flexiblen Verdecks und Überdachungen verwendbar, beispielsweise bei Zelten, wie auch bei Verdecks von anderen Fahrzeugen, beispielsweise Lastwagen und Motorbooten mit Klappverdeck.

Der Erfindung liegt der Gedanke zugrunde, eine Austauschscheibe dadurch einzusetzen, daß eine lösbare Klebverbindung vorzugsweise mit dem stehengelassenen Randbereich einer herausgeschnittenen Scheibe hergestellt wird. Diese Vorgehensweise wird bevorzugt, da sich dadurch eine am wenigsten auftragende und am leichtesten abdichtbare Einbauweise ergibt. Wo die konstruktiven Verhältnisse es gestatten, ist es aber auch möglich, die Austauschscheibe nach Heraustrennen der gesamten zu ersetzenden Scheibe auf die die Fensteröffnung umgebende Umfangskante des Verdecks aufzukleben.

Die lösbare Klebung wird durch einen geeigneten Hotmelt-Kleber erzielt. Für die Erweichung des Klebers, um die Klebverbindung herzustellen wie auch wieder zu lösen, sind in dem Umfangskantenbereich der Austauschscheibe Mittel zum Erwärmen dieses Kantenbereiches und damit des Hotmelt-Klebers vorgesehen. Diese Mittel bestehen zweckmäßigerweise aus elektrischen Heizwiderstandsleitern, die beispielsweise in die Umfangskante der Austauschscheibe eingearbeitet, z.B. eingegossen oder auf deren Oberfläche angebracht sein können. An der bestimmungsgemäßen Innenseite der Scheibe sind Anschlüsse für die Heizleiter vorgesehen, über die eine externe Stromquelle an die Scheibe zum Aktivieren der Heizmittel angeschlossen werden kann.

Bei einer bevorzugten Ausführungsform der Erfindung wird nicht die Austauschscheibe selbst mit dem Heißschmelzkleber versehen, sondern ein spezieller Umlaufrahmen, der entlang der Umfangskante der Austauschscheibe vorgesehen ist. Dieser Umlaufrahmen ist vorzugsweise aus einem flexiblen, zweckmäßigerweise textilen Material und ist so ausgebildet, daß er einerseits den Kantenbereich der eigentlichen Austauschscheibe überlappt, jedoch überkragend über den Kantenbereich der Austauschscheibe hinausragt. Der Umlaufrahmen kann mit der Austauschscheibe vernäht, aber auch verschweißt oder verklebt sein. Aus Sicherheits- und Abdichtungsgründen können auch zwei dieser Verbindungsarten gleichzeitig gewählt werden. Vorzugsweise ist der Umlaufrahmen an der bestimmungsgemäßen Außenseite der Austauschscheibe angebracht, so daß er den stehengelassenen Umfangsbereich der alten Scheibe überlappt und mit diesem verklebt wird, so daß die neue Scheibe und der Rest der alten Scheibe in der gleichen Ebene liegen. Der Umlaufrahmen erstreckt sich dabei zweckmäßigerweise über den gesamten stehengelassenen Bereich der alten Scheibe, wobei er diesen von außen abdeckt und gleichzeitig die Verbindungsstelle verdeckt. Der Umlaufrahmen ist zweckmäßigerweise aus einem wenig UV-strahlungsdurchlässigen, beispielsweise schwarzen Textilmaterial gefertigt, so daß durch längere Sonnenlichteinstrahlung der unter dem Umlaufrahmen befindliche Kleber nicht beeinträchtigt wird.

Wenn es erwünscht ist, kann der Umlaufrahmen selbst aus zwei voneinander trennbaren Teilen bestehen, die beispielsweise mittels eines Reißverschlusses miteinander verbindbar sind. Eine solche Reißverschlußverbindung muß mit entsprechenden Abdichtmitteln versehen sein.

Der Austausch der Scheibe nach dem erfindungsgemäßen Verfahren ist denkbar einfach. Beim ersten Austausch wird die alte Scheibe zweckmäßigerweise derart ausgeschnitten, daß ein äußerer Randbereich stehen bleibt. Die Austauschscheibe wird dann mit ihrem Umfangskantenbereich auf den stehen gebliebenen Randbereich aufgelegt und durch entsprechenden Stromanschluß werden die Aufheizmittel im Umfangskantenbereich der Austauschscheibe aktiviert, wodurch der Heißschmelzkleber erweicht wird, um eine Klebeverbindung mit dem Kantenbereich der alten Scheibe einzugehen. Sodann wird der Stromfluß unterbrochen und der Kleber kann erkalten, wodurch eine dauerhaft feste Verbindung zwischen den betroffenen Flächen entsteht. Wird die erste Austauschscheibe ihrerseits unbrauchbar, braucht der Heißschmelzkleber lediglich durch erneuten Stromanschluß wieder erweicht zu werden, in welchem Zustand dann die unbrauchbar gewordene Scheibe herausgenommen und gegen eine neue Scheibe gleicher Art ersetzt werden kann.

Im folgenden wird die Erfindung unter Hinweis auf die beigefügten Zeichnungen noch zusätzlich erläutert. Darin stellen dar:

Fig. 1 einen schematischen Schnitt durch eine Verbindungsstelle gemäß einer ersten Verfahrensvariante und

Fig.2 einen schematischen Schnitt durch eine Verbindungsstelle gemäß einer zweiten Verfahrensvariante.

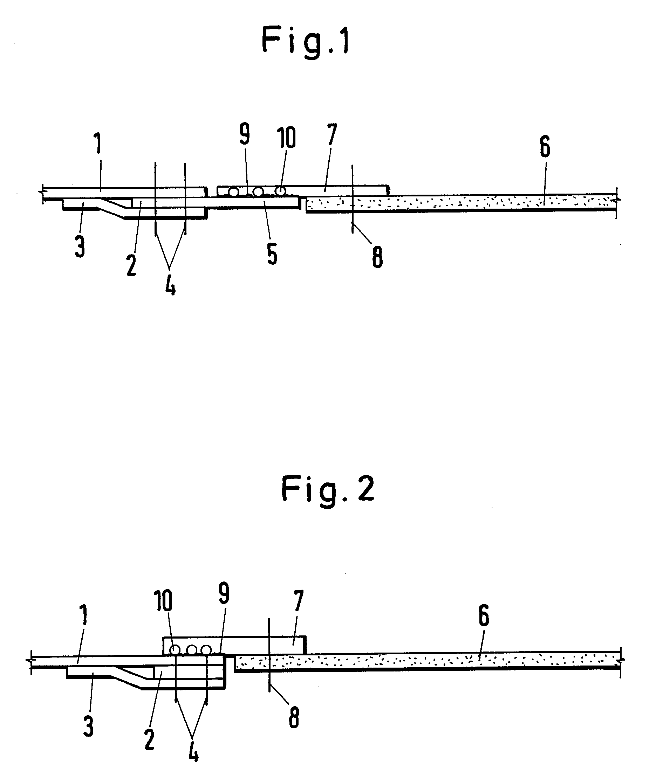

In Figur 1 ist mit 1 das Bespannungsmaterial eines flexiblen Verdecks bezeichnet. Sichtbar ist der Rest 2 der zu ersetzenden Fensterscheibe, welcher in seinem Kantenbereich innenseitig durch eine Abdeckung 3 abgedeckt ist. Diese Schichtanordnung ist beispielsweise mittels Nähten 4 vernäht. Die alte Scheibe 2 ist derart aus der Fensteröffnung herausgeschnitten, daß ein Randbereich 5 stehen geblieben ist. Eine flexible Austauschscheibe 6 ist in ihrem Kantenbereich mit einem Umlaufrahmen 7 versehen, der mittels einer Naht 8 mit der Scheibe 6 vernäht ist. Zusätzlich kann der textile Umlaufrahmen 7 durch Hochfrequenzverschweißung mit der Austauschscheibe 6 verschweißt sein. In seinem überstehenden Bereich ist der Umlaufrahmen 7 an seiner Unterseite mit einem Hotmelt-Kleber 9 versehen. Im Umlaufrahmen 7 sind ferner Widerstandsheizdrähte 10 angeordnet, durch deren Strombeaufschlagung der Hotmelt-Kleber 9 in einen erweichten Zustand überführbar ist. In diesem Zustand wird die neue Scheibe 6 mit ihrem Umlaufrahmen 7 auf den Randbereich 5 der alten Scheibe aufgelegt und der Kleber dann erkalten gelassen. Auf diese Weise entsteht eine dauerhafte und dichte Verklebung zwischen der Kante 5 der alten Scheibe und der neuen Scheibe 6 bzw. deren Umlaufrahmen 7. Wie aus Figur 1 zu erkennen ist, deckt der Umlaufrahmen 7 die Verbindungsstelle vollständig ab, so daß das Verdeck auch mit der Austauschscheibe von außen ansprechend aussieht. Die nicht dargestellten elektrischen Anschlüsse für die Widerstandsheizdrähte 10 sind an der Innenseite der Scheibe vorgesehen, damit sie von außen nicht unbefugt verwendet werden können.

Die Ausführungsform der Figur 2 unterscheidet sich von derjenigen gemäß Figur 1 nur dadurch, daß hier nicht ein Restteil der alten Scheibe 2 stehengelassen wurde, sondern der Umlaufrahmen 7 direkt auf die Umfangskante der Verdeckbespannung 1 aufgeklebt ist. Die Vorgehensweise ist die gleiche. Wie sich aus den zeichnerischen Darstellungen ergibt, ist die Ausführungsform gemäß Figur 1 jedoch die elegantere und weniger auftragende. Sie hat jedoch den Nachteil, daß die Scheibenfläche der Austauschscheibe etwas kleiner sein muß als im Falle der Figur 2.

Durch Wiedererweichen des Heißschmelzklebers 9 aufgrund von Aktivieren der Widerstandsheizdrähte 10 kann die Klebverbindung wieder gelöst werden, wenn die Austauschscheibe unbrauchbar geworden ist und gegen eine neue ersetzt werden soll.

## Ansprüche

1. Verfahren zum Ersetzen der (flexiblen) Fensterscheibe in einer flexiblen Verdeckbespannung, insbesondere im Klappverdeck eines Fahrzeuges, gekennzeichnet durch folgende Verfahrensschritte:

a) Herausschneiden der zu ersetzenden Fensterscheibe (2),

b) Bereitstellen einer Austauschfensterscheibe (6), deren Flächenabmessungen einschließlich eines gegebenenfalls vorgesehenen Umlaufrahmens (7) etwas größer sind als die herausgeschnittene Fläche der zu ersetzenden Scheibe (2) und die in ihrem Umfangskantenbereich auf einer Seite mit einem Hotmelt-Kleber (9) versehen ist und die in diesem Umfangskantenbereich Mittel (10) zum Aufheizen des Hotmelt-Klebers enthält,

c) Aufsetzen der Austauschscheibe (6) auf die Fensteröffnung,

d) Aktivieren der Aufheizmittel (10) für den Hotmelt-Kleber (9),

e) Andrücken des Kantenbereiches der Austauschscheibe (6) an die Fensteröffnungskante und

f) Deaktivieren der Aufheizmittel (10) und Erkaltenlassen des Klebers (9).

2. Verfahren nach Anspruch 1, dadurch gekennzeichnet, daß die zu ersetzende Scheibe (2) derart ausgeschnitten wird, daß ein Umfangsstreifen (5) entlang der Fensteröffnung erhalten bleibt, und daß die Austauschscheibe mit diesem Umfangsstreifen (5) verklebt wird.

3. Verfahren nach Anspruch 1, dadurch gekennzeichnet, daß die zu ersetzende Scheibe (2) entlang der die Fensteröffnung begrenzenden Verdeckkante (1) ausgeschnitten und die Austauschscheibe bzw. deren gegebenenfalls vorhandenes flexibles Rahmenteil (7) mit dem Verdeckmaterial (1) verklebt wird.

4. Austauschfensterscheibe für eine flexible Verdeckbespannung, insbesondere ein Klappverdeck eines Fahrzeuges, dadurch gekennzeichnet, daß sie an einer ihrer Oberflächenseiten in einem Umfangskantenbereich mit einem Hotmelt-Kleber (9) versehen ist, und daß in diesem Umfangskantenbereich Mittel (10) zum Erhitzen des Hotmelt-Klebers (9) vorgesehen sind.

5. Austauschscheibe nach Anspruch 4, dadurch gekennzeichnet, daß die Mittel zum Erhitzen in den Umfangskantenbereich eingearbeitete und von außen mit einem Heizstrom beaufschlagbare elektrische Widerstandsheizleiter (10) sind.

6. Austauschscheibe nach Anspruch 4 oder 5, dadurch gekennzeichnet, daß der mit dem Hotmelt-Kleber (9) versehene Umfangskantenbereich Teil eines flexiblen, insbesondere textilen Umlaufrahmens (7) ist, der an der Umfangskante der eigentlichen Scheibe (6) befestigt ist.

7. Austauschscheibe nach Anspruch 6, dadurch gekennzeichnet, daß der Umlaufrahmen (7) an der bestimmungsgemäßen Außenseite der Scheibe (6) und der Hotmelt-Kleber (9) an der bestimmungsgemäßen Innenseite des überstehenden Teiles des Umlaufrahmens (7) angeordnet ist.

8. Austauschscheibe nach Anspruch 7, dadurch gekennzeichnet, daß der Umlaufrahmen (7) aus einem wenig UV-strahlungsdurchlässigen Material besteht.

9. Austauschscheibe nach mindestens einem der Ansprüche 4-8, dadurch gekennzeichnet, daß der Umlaufrahmen (7) mit der Scheibe (6) vernäht und/oder verklebt bzw. verschweißt ist.

10. Austauschscheibe nach mindestens einem der Ansprüche 4-9, dadurch gekennzeichnet, daß der Umlaufrahmen seinerseits aus zwei voneinander trennbaren Teilen besteht.

11. Austauschscheibe nach Anspruch 10, dadurch gekennzeichnet, daß die Teile des Umlaufrahmens mittels eines abdichtbaren Reißverschlusses miteinander verbindbar sind.

12. Austauschscheibe nach mindestens einem der Ansprüche 6-11, dadurch gekennzeichnet, daß die elektrischen Widerstandsheizleiter (10) in den Umlaufrahmen (7) eingearbeitet sind.

# Fig.1

# Fig.2